# EUROPEAN PATENT APPLICATION

(11) **EP 3 839 243 A1**
(43) Date of publication of application: **23.06.2021**
(21) Application number: 19849563.2
(22) Date of filing: 02.08.2019
(51) Int. Cl.: F03B 13/00, F04B 1/047, F04B 1/107, F03D 9/28

(54) **MOTOR PUMP FOR USING THE ENERGY OF ONE OR MORE CONSTANT- OR VARIABLE-POWER ENERGY SOURCES TO PUMP FLUIDS AT A CONSTANT PRESET PRESSURE AND GENERATE ELECTRICITY**

(30) Priority: 14.08.2018 ES 201831274 U
(71) Applicant: Rotary Wave, S.L., 46900 Torrent (Valencia) (ES)
(72) Inventor: PLANELLS ALOS, Lluis, 46900 Torrent (Valencia) (ES)
(74) Representative: Ungria López, Javier
(86) International application number: PCT/ES2019/070551
(87) International publication number: WO 2020/035627

(57) **Abstract**

The invention relates to a motor pump for using energy from energy sources to pump fluids at a constant preset pressure and generate electricity, which is provided with a rotary shaft (1) that is driven by an electric or thermal motor (31) or a wind turbine (31) or water turbine (31) or a machine (31) for obtaining wave energy and/or a pressurised fluid, which, acting on pistons (3, 4, 5 6, 7, 8) having different cross sections and located radially around at least one cam (2) solidly connected to the shaft (1), cause the shaft (1) to rotate, the shaft being provided with at least one solidly connected cam (14) that, during rotation, sequentially actuates pistons (15, 16, 17, 18, 19, 20) located radially around the cam (14) and having different cross sections, thereby driving the fluid at a constant pressure, regardless of whether the energy provided to the device is constant or variable.

## Description

### TECHNICAL FIELD

The present invention is applicable in the field of fluid pump and motor technology.

### STATE OF THE ART

Using fluids to transport energy over short distances is technically and economically feasible. There are various machines that use these fluids by injecting them with kinetic or static energy in order to transport them from one place to another. These machines are called fluid pumps. Furthermore, there are machines that use the energy of the movement of the fluids or use the pressure difference to obtain the energy of these fluids, causing a shaft to rotate or a rod to move and these are called motors.

In order to inject energy into a fluid, various types of pumps are used that modify both the static pressure of the fluid and the dynamic pressure thereof. Different pumps are known as impeller, centrifugal, piston, blade, lobe, helical, screw, etc. All these pumps are characterised in that they have a rotary shaft and elements that drive the fluid to be pumped.

In order to obtain the energy of the fluid, various motors are utilised that use both the static pressure of the fluid and the dynamic pressure thereof, the different turbines, Kaplan, Francis, Pelton and an endless number of mixed turbines based on blades that cause a rotary shaft to rotate are known. These machines use the kinetic energy of the fluid.

Today's turbines have a limited range of pressures and fluid speeds that they can use. For example, the Pelton turbine can only work at pressures of up to 70 bars, due to abrasion problems of the blades thereof at high fluid speeds.

Kaplan- and Francis-type turbines are limited by Betz's law, which prevents them from obtaining the entire energy of the moving fluid, and another limitation is the speed of the water flow through the blades thereof. They are low hydrostatic and dynamic pressure motors.

Other types of motors are the so-called vane, gear, lobe, piston motors, etc. These machines use the potential energy or pressure of the fluid. Vane, gear, lobe or piston motors, among others, are motors that utilise pressurised fluid for lubrication and therefore there are fluid losses between the rotating part and the walls of the motor, not being suitable for working at high pressures since the abrasion generated by the fluid on the walls of the motor makes them unviable at high pressures. Pistons must be used for high pressures. Another problem that these motors exhibit is that at low revolutions the losses of the lubricating fluid become very large compared to the used flow.

The invention proposed in this application is based on a machine with pistons having different cross sections to obtain, from a variable or non-variable energy source, a fluid at a constant preset pressure, or to obtain a mechanical rotation energy or translation if a pressurised fluid is used as an energy source.

### DESCRIPTION OF THE INVENTION

### Object of the invention

The object of the invention is a motor pump for using the energy of one or more variable or non-variable energy sources to pump fluids at a constant preset pressure at any time or to obtain mechanical energy from a pressurised fluid.

### Technical problem to solve

In the field of high pressure fluids management for fluids other than hydraulic oil, there is a lack of pumps and motors to obtain power from said fluids. Likewise, today's fluid pumps and motors need to run above a certain number of revolutions. Our invention has no limitation regarding the fluid to utilise and the operation thereof is not limited to a minimum number of revolutions.

In the field of renewable energies of marine, solar or wind origin, the main feature is the continuous variability thereof. This problem generates performance losses of the machines for obtaining this type of energies.

The motor pump machine object of the invention solves the problem of the fluctuation of renewable energies of marine, solar and wind origin by being able to laminate the fluctuations of this energy by transforming them into hydraulic energy at a preset pressure. This lamination of the fluctuations of the energy of marine, solar or wind origin enables the industrial use thereof to be more efficient.

### Description of the invention

The motor pump object of the invention is a volumetric piston motor pump to use the energy of a pressurised fluid or of a variable or non-variable energy source to pressurise other fluids at a constant pressure or to produce electrical energy.

The operating principle of the motor pump object of this invention is the opposition of an equal force, at any time, to the force exerted by the energy input mechanism utilising a selection of pistons having different cross sections.

The force exerted by a hydraulic-type piston is the product of multiplying the cross section thereof by the pressure of the fluid to which it is subjected and, conversely, this rule is also fulfilled, in that the pressure that a fluid reaches is a function of the force exerted on the rod of the piston, divided by the surface of the piston.

The present invention utilises this rule or law of mechanics, Pascal's law, to regulate the outlet pressure of the motor pump object of the invention by varying the surface of the pistons on which the motor force acts. This variation of the surface is carried out by connecting or disconnecting the different pistons of the motor pump object of the invention to adapt, at any time, the incoming motor energy with the sum of the surfaces of the pistons that drive the outlet fluid and the set outlet pressure.

The features of the motor pump object of the invention make it ideal for use thereof in the generation of renewable energies, since the main feature of these energies is the continuous variation thereof over time.

The incoming constant or non-constant motor energy, is of a mechanical nature or in the form of a pressurised fluid that acts on a shaft causing it to rotate or produces an axial movement or acts on a hydraulic-type piston.

The pistons utilised in the motor pumps object of this invention are hermetically sealed and therefore without fluid loss to the outside. This feature enables any type of fluid to be admitted and expelled, such as gases, liquids such as: hydrocarbons, oils, water, salt water, acids, alkalis, etc.

Depending on whether the movement of the shaft is rotational or axial and by the arrangement of the pistons thereof, we divide the motor pump object of the invention into three groups:
- Rotary motor pump with one or more cams
- Axial motor pump with pistons in axial arrangement
- Axial motor pump with pistons in radial arrangement

### Description of the operation of the rotary motor pump with one or more cams

### 1) actuated by mechanical energy.

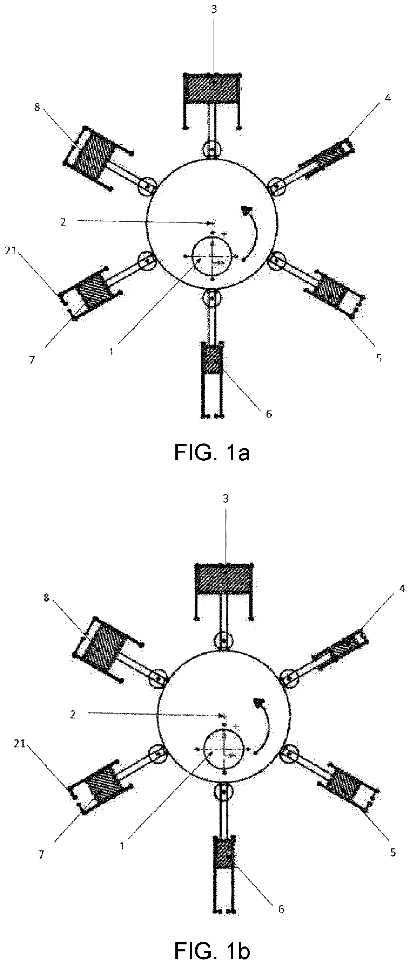

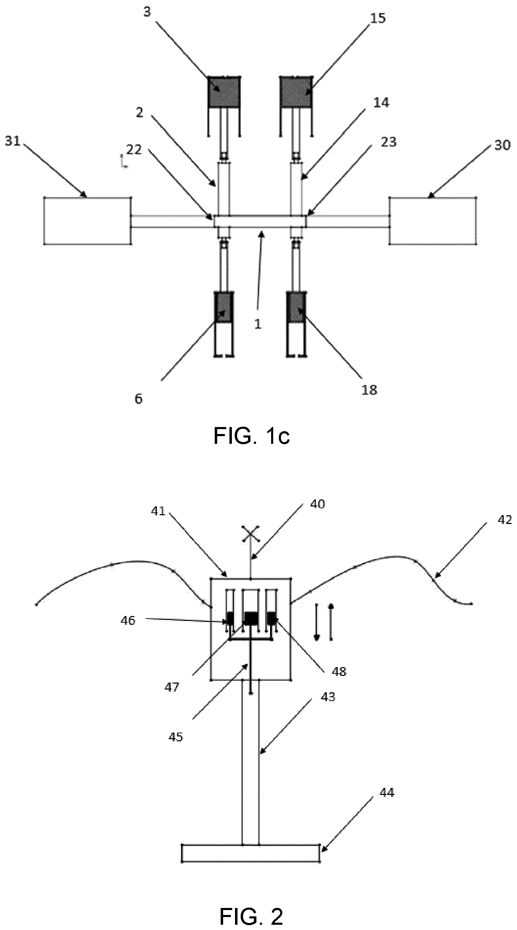

In the mechanism represented in Figures 1a and 1b and 1c, we have a rotary shaft (1) actuated by a motor (31) connected to the end (22) of the shaft (1). This motor (31) represents a turbine moved by the wind, or a machine for using wave energy or water currents, or a thermal machine, or a motor actuated by solar energy, or an electric motor, or in general any motor that can rotate the shaft (1).

On said axis (1) and solidly connected to it, there are several cams, only two (2,14) of which are represented in this Figure 1c, that rotate attached to the shaft (1).

Arranged radially and in contact with the cam (2) a series of pistons having different cross sections is arranged, only six (3,4,5,6,7,8) of which are represented in this Figure 1a and on the cam (14) a series of pistons having different cross sections (15,16,17,18,19,20) is arranged, only six of which are represented in this Figure 1b.

This arrangement, Figure 1c, shows the rotary cams (2,14) around the shaft (1) and a series of radial pistons having different cross sections (3,6) and (15,18) are arranged radially around them, only two of which are represented in this Figure 1c around each cam, and which pump a fluid at a preset pressure.

The rotor shaft (1) drags the cams (2,14) solidly connected thereto during rotation, and these in turn impose a movement to the series of piston rods having different cross sections (3,6) and (15,18), only two of which have been represented in this Figure 1c on each cam, which causes them to drive the fluid from the inside of the piston to the outside (21) thereof.

The torque opposing the rotation of the cams (2,14) is exerted by the pressure of the fluid to be pumped, which by acting on the different cross sections of the series of pistons (3,6) and (15,18), results in the equality of torques according to Figure 1c.

In the event that more power from the motor pump is required, there is the option of putting more cams on the shaft (1) and the corresponding set of pistons thereof, causing the final power of the motor pump object of the invention to increase when the number of cams and pistons is increased and is only limited by the power available in the shaft (1).

This configuration of the motor pump object of the invention enables the constant output pressure of the pumped fluid to be set, selecting which pistons act and which ones do not and results in a power that is equal to that available on the rotor shaft (1) at any time.

To select which pistons having different cross sections (3,4,5,6,7,8) and (15,16,17,18,19,20) of Figures 1a and 1b should be energised (connected), so that the equality of (motor) torques and (resistant) torques takes place at any time is carried out by the performance of a machine called PLC. This PLC machine is a digital computer that controls the different command valves of each piston (3,4,5,6,7,8) and (15,16,17,18,19,20). This PLC machine common in all fields of the industry, (Controllable Logic Programmer) is not object of this invention. 2) actuated by hydraulic power.

In the motor pump object of the invention represented in Figures 1a and 1b and 1c, a series of pistons having different cross sections, six of which (3,4,5,6,7,8) are represented in Figure 1 in contact with one or more cams, one (2) of which is represented in Figure 1a, are powered by a fluid at a constant or non-constant pressure. The pistons having different cross sections (3,4,5,6,7,8) exert a force on the cam (2) that causes the shaft (1) to rotate according to Figure 1a. The shaft (1) has another series of cams attached thereto, only one of which (14) is represented in this Figure 1b, which the shaft causes to rotate solidly connected thereto. This cam (14) is radially coupled to a series of pistons, only six (15,16,17,18,19,20) of which, having different cross sections, are represented in this Figure 1b, that pump a fluid at the required pressure regardless of the hydraulic energy supplied to the pistons of the cam (2).

This function of the motor pump object of the invention is controlled by the PLC machine that sends the electrical signal to the electric valves that adjust the flow of fluid from the pistons having different cross sections (3,4,5,6,7,8) and (15,16,17 18,19,20) sending the electrical signal to energise or not the different pistons having different cross sections (3,4,5,6,7,8) and (15,16,17,18,19,20) so that the torque generated to the shaft (1) is constant at any time regardless of the pressure of the fluid entering the motor pump object of the invention. The PLC machine is not object of this invention.

The motor pump object of the invention represented in Figures 1a, 1b and 1c, generates electrical energy if the series of different pistons having different cross sections (3,4,5,6,7,8) and (15,16,17,18,19,20), six of which have been represented in this Figure 1a and 1b in each series, are powered by a fluid at constant or non-constant pressure. The different pistons exert a force on the series of cams, only two (3,14) of which are represented in this Figure 1c that cause the shaft (1) to rotate. This shaft (1) is coupled to the generator (30) by the end (23) of the shaft (1). This function of the motor pump object of the invention is controlled by the PLC machine that sends the electrical signal to the electric valves that adjust the flow of fluid from the pistons (3,4,5,6,7,8) and (15,16,17,18,19,20) having different cross sections sending the electrical signal to energise or not the different pistons having different cross sections (3,4,5,6,7,8) and (15,16,17,18,19,20) so that the torque generated to the shaft (1) is constant at any time regardless of the pressure of the fluid entering the motor pump object of the invention. The PLC machine is not object of this invention.

### Description of the operation of the axial motor pump with pistons in axial arrangement

### 1) actuated by mechanical energy

Figure 2 represents the motor pump object of the invention, wherein the source of motor energy is by means of a marine machine (buoy) (40,41,43,44) that upon the passage of the waves (42) imposes an axial movement to a shaft or rod (45) connected to a series of pistons, three (46,47,48) of which, having different cross sections, have been represented in this Figure 2, are capable of pumping a fluid at a demanded pressure regardless of the motor energy of the shaft or rod (45).

To perform the pumping function of a fluid at constant pressure, the different pistons (46,47,48) are energised or not, so that the opposing force to the rod or shaft (45) is equal to the motor energy supplied by the wave (42) to the buoy (40,41,43,44) at all times. The PLC machine that is responsible for energising the different pistons (46,47,48) is not object of this invention. 2) actuated by hydraulic power.

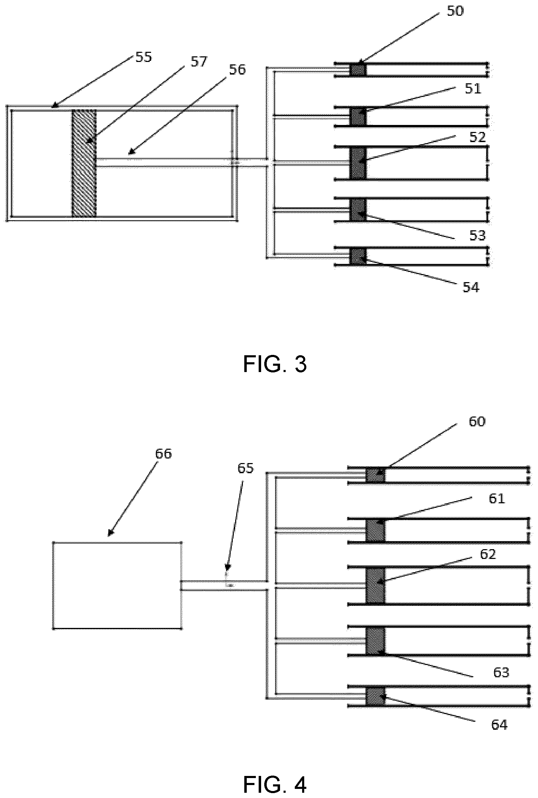

Figure 3 represents the motor pump object of the invention in the form of a shaft or rod (56) that is actuated by a piston (57) that is energised by a fluid at a constant pressure or not and a series of pistons coupled to said rod (57), five (50,51,52,53,54) of which having different cross sections have been represented in this Figure 3, pump a fluid at a constant pressure and regardless of the force exerted on the rod (56) driven by the piston (57).

Opposing the force exerted by the pressure when acting on the piston (57) there is a series of pistons (50,51,52,53,54) having different cross sections mounted, the opposing force of which is a direct function of the demanded pressure. A PLC machine, which is not object of this invention, is used to control which pistons (50,51,52,53,54) must be energised.

The motor pump object of the invention represented in Figure 3 is reversible and the fluid circulates in the opposite direction when the different pistons (50,51,52,53,54) are powered by a pressurised fluid and exert a force on the rod or shaft (56) and impose an axial movement that is used to pump a fluid in the piston (57).

Figure 4 shows how the motor pump object of the invention coupled to a linear electricity generator (66) produces electricity. For this, the different pistons, five (60,61,62,63,64) of which having different cross sections have been represented in this Figure 4, are powered by a fluid at constant or non-constant pressure. The force exerted on the rod or shaft (65) is a linear function of the pressure of the pressurised fluid multiplied by the surface of the different pistons (60,61,62,63,64) that are energised. The energising of the different pistons (60,61,62,63,64) is a function of the PLC electric machine. The PLC machine is not object of this invention.

### Description of the operation of the axial motor pump with pistons in radial arrangement

### 1) actuated by mechanical energy

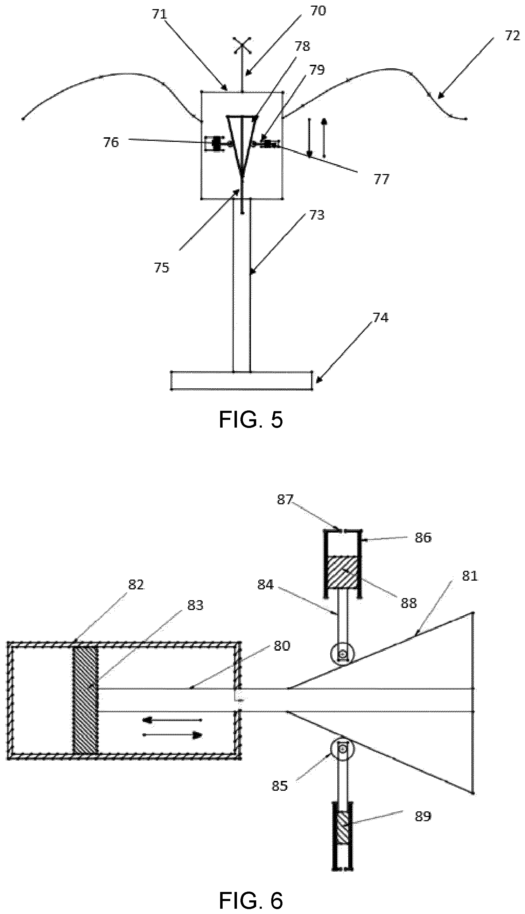

Figure 5 represents the motor pump object of the invention, wherein the source of motor energy is by means of a marine machine (buoy) (70,71,73,74) which upon the passage of the waves (72) imposes an axial movement to a shaft or rod (75) that has a series of lateral ramps (78) wherein the rods of the series of radial cylinder rest with their rolling element (79), two (76,77) of which having different cross sections have been represented in this Figure 5 that when the rod of the buoy (70,71,73,74) moves, the inclined plane of the ramp (78) pushes the rods of the pistons (76,77) with the rolling elements (79) thereof and they pump a fluid at demanded pressure regardless of the motor energy of the shaft or rod (75).

To perform the pumping function of a fluid at constant pressure, the different pistons (76,77) are energised or not so that the opposing force to the rod or shaft (75) is equal to the motor energy supplied by the wave (72) to the buoy (70,71,73,74) at any time. The PLC machine that is in charge of energising the different pistons (76,77) is not object of this invention.

### 2) actuated by hydraulic power

Figure 6 represents the motor pump object of the invention connected to the rod or shaft (80) which in turn is actuated by the piston (83) that receives a pressurised fluid and acts as a linear (axial) motor.

The motor pump object of the invention is made up of a series of pistons having different cross sections, two (86,89) of which have been represented in this Figure 6 arranged radially on the ramps (81) with the rod (84) and rolling element (85) thereof that rolls on the ramps (81) when the piston (83) is actuated.

The series of pistons having different cross sections, two (86,89) of which have been represented in this Figure 6, arranged radially on the shaft (80) which imposes a movement on them that pumps a fluid through the holes (87) at the required pressure.

The force exerted by the piston (83) through the shaft or rod (80) at any time is compensated by the pumping pressure of the series of pistons having different cross sections (86,89) when energised by the PLC machine.

Figure 6 represents the pistons of the motor pump which pump a fluid at a constant pressure in the opposite direction if the pressurised fluid acts on the pistons having different cross sections (86,89) arranged radially. The pressure of the fluid exerts a force proportional to the cross section of each piston having different cross sections, two (86,89) of which have been represented in this Figure 6. This force exerted on the ramps (81) imposes a radial movement to the rod or shaft (80) which in turn actuates on the piston (83) and this piston (83) pumps a fluid at the required pressure at any time. In this case, the motor pump acts with longitudinal movement by using the energy of a source of fluid at a constant or variable pressure.

The energising of the pistons (86,89) or not is a function of the PLC electric machine which is not object of this invention.

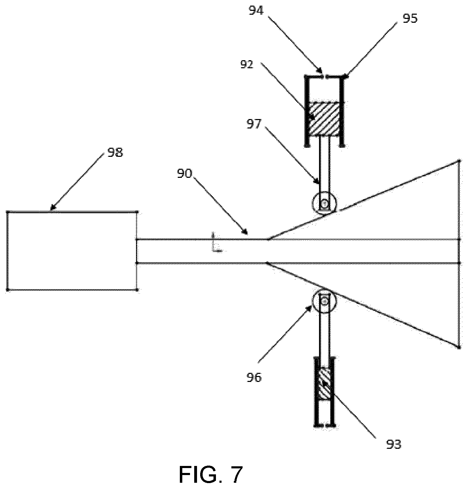

Figure 7 shows the arrangement of the motor pump object of the invention when it acts to produce electrical energy by means of a linear generator (98) connected to the rod or shaft (90). The operation of the pistons having different cross sections, two (92,93) of which have been represented in this Figure 7, is a function of the PLC electric machine that is not object of this invention.
Fluid opening and closing valves sequencer.

In order for the motor pump machine object of the invention to operate, a valve opening and closing sequencer is necessary so that a preset quantity of fluid enters or leaves a part of a certain piston of the motor pump object of the invention.

This valve sequencer is not object of this invention as it is a product already used by the industry for decades. The technical name of this sequencer is PLC (Controllable Logic Programmer).

By appropriately combining the opening and closing valve sequencer, the volume of the fluid on pistons having different cross sections of the machine object of the invention are controlled.

### DESCRIPTION OF THE DRAWINGS

Figure 1a. Cross section of the two-cam rotary motor pump at cam level 2, included in this specification, consists of the following elements:
   1) Rotary shaft.
   2) Cam.
   3) Piston.
   4) Piston.
   5) Piston.
   6) Piston.
   7) Piston.
   8) Piston.
   21) Fluid inlet and outlet hole.
Figure 1b. Cross section of the two-cam rotary motor pump at cam level 14, included in this specification, consists of the following elements:
   1) Rotary shaft.
   14) Cam.
   15) Piston.
   16) Piston.
   17) Piston.
   18) Piston.
   19) Piston.
   20) Piston.
   21) Fluid inlet and outlet hole.
Figure 1c. Longitudinal section of the two-cam rotary motor pump, included in this specification, consists of the following elements:
   1) Rotary shaft.
   2) Cam.
   3) Piston.
   6) Piston.
   14) Cam.
   15) Piston.
   18) Piston.
   22) Shaft end.
   23) Shaft end.
   30) Electricity generator.
   31) Power motor.
Figure 2. Cross section of the axial piston motor pump in axial position. Marine wave machine, included in this specification, consists of the following elements:
   40) Maritime signalling.
   41) Buoy body.
   42) Wave.
   43) Pillar of the buoy.
   44) Base of the buoy.
   45) Rod.
   46) Piston.
   47) Piston.
   48) Piston.
Figure 3. Longitudinal section of the axial piston motor pump in axial position, actuated by pressurised fluid, included in this specification, consists of the following elements:
   50) Piston.
   51) Piston.
   52) Piston.
   53) Piston.
   54) Piston.
   55) Piston housing.
   56) Rod.
   57) Piston.
Figure 4. Longitudinal section of the axial piston motor pump in axial position, to generate electricity, included in this specification, consists of the following elements:
   60) Piston.
   61) Piston.
   62) Piston.
   63) Piston.
   64) Piston.
   65) Rod.
   66) Linear electricity generator.
Figure 5. Cross section of the axial piston motor pump in radial position. Marine wave machine, included in this specification, consists of the following elements:
   70) Maritime signalling.
   71) Buoy body.
   72) Wave.
   73) Pillar of the buoy.
   74) Base of the buoy.
   75) Rod.
   76) Piston.
   77) Piston.
   78) Ramp.
   79) Rod and rolling element.
Figure 6. Longitudinal section of the axial piston motor pump in radial position, actuated by pressurised fluid, included in this specification, consists of the following elements:
   80) Piston rod.
   81) Ramp.
   82) Piston housing.
   83) Piston.
   84) Piston rod.
   85) Bearing.
   86) Piston housing.
   87) Fluid inlet and outlet hole.
   88) Piston.
   89) Piston.
Figure 7. Longitudinal section of the axial piston motor pump in radial position, to generate electricity, included in this specification, consists of the following elements:
   90) Rod.
   91) Ramp.
   92) Piston
   93) Piston.
   94) Fluid inlet and outlet hole.
   95) Piston housing.
   96) Bearing.
   97) Piston rod.
   98) Linear electricity generator.

### DETAILED PRESENTATION OF AN EXEMPLARY EMBODIMENT OF THE INVENTION

As a preferred embodiment of the motor pump object of the invention, it is described below an application, in the field of renewable energies of wind and marine origin, to desalinate salt water by reverse osmosis and to generate electricity.

The motor pump according to Figure 1c, which represents the motor pump actuated by a wind turbine, is mounted on the nacelle of a wind turbine and uses the rotation of the wind turbine to cause the shaft (1) with cams (2,14) solidly connected thereto to rotate. On the cam (2) there is a series of pistons having different cross sections (3,4,5,6,7,8) and, on the cam (14), there is a series of pistons having different cross sections (15,16,17,18,19,20) that, when the cams (2,14) rotate, drive them to pump a fluid at the pressure required to capture the highest possible energy from the impacting wind.

To make good use of the wind energy, the wind turbine must oppose a resistance to the wind at all times that maximises the energy capture coefficient of said wind turbine. The motor pump object of the invention opposes said resistance force to the rotary movement of the turbine.

This is achieved by means of the PLC valve sequencer that programs, at any time, which number of different cross section pistons (3,4,5,6,7,8) and (15,16,17,18,19,20) must be pressurised so that the opposing force (pressurised surface) of the displaced fluid causes the wind turbine blades to rotate at the angular speed that provides maximum energy capture.

In this embodiment that we are explaining, it utilises an energy source of marine origin that has a motor pump object of the invention according to Figure 2. This so-called axial motor pump with pistons in axial arrangement actuated by wave energy, which move the buoy (40,41,43,44) that drives the series of pistons having different cross sections (46,47,48) by means of the rod (45) that pump a fluid at a preset pressure at all times. The function of energising or not the pistons (46,47,48) having different cross sections is directed by the PLC machine so that the opposition of the pistons (46,47,48) is equal, at any time, to the force generated by the buoy (40,41,43,44) upon the passage of the waves.

On land, both sources of fluid at a preset pressure coming from the wind turbines and the marine machine are led to the axial motor pump with pistons in axial arrangement actuated by pressurised fluid, according to Figure 3, only five pistons of which having different cross sections are represented (50,51,52,53,54). Both flows of pressurised fluid, coming from the wind turbine and the marine machine, are joined together to power the piston (57) of Figure 3. This piston (57) in turn drives the rod (56) that connects the series of pistons having different cross sections (50,51,52,53,54) which in turn pump the treated water to introduce it into the reverse osmosis desalination membranes.

Reverse osmosis desalination membranes need the inlet pressure to be very stable and at the correct pressure for maximum desalination efficiency.

The motor pump described in Figure 3 achieves this by accommodating pistons having different cross sections (50,51,52,53,54) which are energised or not for the correct exit of the salt water for desalination. This function of connecting or disconnecting the pistons having different cross sections is performed by the PLC machine so that the energy entering the piston (57) is equal to that pumped, at any time, in the form of salt water by the pistons having different cross sections (50,51, 52,53,54).

In a reverse osmosis desalination plant, a portion of the incoming water leaves the membranes with a higher saline load and at a pressure that is somewhat lower than that of the salt water at the inlet of the reverse osmosis membranes. This water with a high saline load is utilised to use the energy thereof in the form of pressure to introduce more salt water to the reverse osmosis membranes. The motor pump object of the invention, called axial motor pump with pistons in radial arrangement, actuated by pressurised fluid according to Figure 6 wherein only two pistons are represented of a series of pistons having different cross sections (88,89). The water with a high saline load is introduced into the piston (83) of Figure 6, exerting a force on the rod (80) which in turn drives the radial pistons (86,87) pumping the salt water at the pressure necessary for entering the reverse osmosis membranes.

In cases where the desalination plant is not fully operational or the available energy sources, wind power or marine, are more abundant than the energy needed to operate the desalination plant, this excess energy by way of pressurised fluid, is transformed into electrical energy when using the motor pump described according to Figure 1c.

The motor pump object of the invention described in Figure 1c, called a rotary motor pump actuated by pressurised fluid to generate electricity, is comprised of a rotary shaft (1) coupled to two cams (2,14) that are actuated by two sets of radial pistons having different cross sections (3,6) and (15,18) represented in Figure 1c actuated by the excess pressurised fluid from the desalination plant.

The shaft (1) is connected to an electricity generator (30) connected to the end (23) of the shaft (1).

In this multiple preferred application of the invention, different configurations of the motor pump object of the invention are used to meet the energy and efficiency needs of a reverse osmosis desalination plant that uses renewable energies for the operation thereof.

### INDUSTRIAL APPLICATION

The motor pump machine object of the invention has industrial application, in addition to in other fields, in the recovery of energy from the brines obtained after the desalination process by reverse osmosis.

In the application of the recovery of energy from the brines, the motor-pump machine object of the invention receives the pressurised brine from the outlet of the reverse osmosis membranes that feeds the pistons thereof, increases the pressure of the water to be desalinated up to the inlet requirement to the reverse osmosis membrane to which it is sent, without mixing between both fluids.

## Claims

1. A motor pump for using the energy of one or more constant or variable power energy sources to pump fluids at a constant preset pressure and generate electricity **characterised in that** it has a rotary shaft (1), driven by an electric motor (31) or a thermal motor (31) or a wind turbine (31) or a water turbine (31) or a machine for obtaining wave energy (31), and/or a pressurised fluid which acting on a series of pistons with a variable number of pistons (3,4,5,6,7,8), having different cross sections and located radially around one or more cams (2) which are solidly connected to the shaft (1), cause same to rotate and then on said shaft we have one or more cams (14) solidly connected to the shaft, that, during rotation, sequentially actuate a series with a variable number of pistons (15,16,17,18,19,20) located radially around said cam (14), having different cross sections, which, appropriately selected, drive a fluid at a constant pressure, regardless of whether the energy provided to the device is constant or variable, and/or an electricity generator (30) coupled to said rotary shaft (1), electricity is produced, or by having a rod (45,56, 65,75,80 or 90) that is part of a marine machine (Figures 2 and 5) that upon the passage of waves (42 or 72) produces the axial (linear) displacement thereof or a piston (57 or 83) that is actuated by a pressurised fluid and both devices axially move the aforementioned rod (45,56,65,75,80 or 90), which drives a series of axial (46,47,48 or 50,51,52,53,54 or 60,61,62,63,64) or radial (76,77 or 88,89 or 92,93) pistons, having different cross sections, which appropriately selected pump a fluid at a constant pressure, regardless of whether the energy provided to the device is constant or variable, or a series of pistons (60,61,62,63,64 or 93,94) that actuated by a pressurised fluid move the rod (65,90) that coupled to a linear electricity generator (66 or 98) produces electricity.

2. A motor pump for using the energy of one or more constant or variable power energy sources, to pump fluids at a constant preset pressure and generate electricity **characterised in that** it has a rotary shaft (1), driven by an electric motor (31), that causes the shaft (1) to rotate and then on said shaft (1) we have one or more cams (14) solidly connected to the same shaft (1), that during rotation sequentially actuate a series with a variable number of pistons (15,16,17,18,19,20) located radially around this cam (14), having different cross sections, which appropriately selected pump a fluid at a constant pressure, regardless of whether the energy provided to the device is constant or variable.

3. A motor pump for using the energy of one or more constant or variable power energy sources, to pump fluids at a constant preset pressure and generate electricity **characterised in that** it has a rotary shaft (1), driven by a thermal motor (31), that causes the shaft (1) to rotate and then on said shaft (1) we have one or more cams (14) solidly connected to the same shaft (1), that during rotation sequentially actuate a series with a variable number of pistons (15,16,17,18,19,20) located radially around this cam (14), having different cross sections, which appropriately selected pump a fluid at a constant pressure, regardless of whether the energy provided to the device is constant or variable.

4. A motor pump for using the energy of one or more constant or variable power energy sources, to pump fluids at a constant preset pressure and generate electricity **characterised in that** it has a rotary shaft (1), driven by a water turbine (31), that causes the shaft (1) to rotate and then on said shaft (1) we have one or more cams (14) solidly connected to the same shaft (1), that during rotation sequentially actuate a series with a variable number of pistons (15,16,17,18,19,20) located radially around this cam (14), having different cross sections, which appropriately selected pump a fluid at a constant pressure, regardless of whether the energy provided to the device is constant or variable.

5. A motor pump for using the energy of one or more constant or variable power energy sources, to pump fluids at a constant preset pressure and generate electricity **characterised in that** it has a rotary shaft (1), driven by a wind turbine (31), that causes the shaft (1) to rotate and then on said shaft (1) we have one or more cams (14) solidly connected to the same shaft (1), that during rotation sequentially actuate a series with a variable number of pistons (15,16,17,18,19,20) located radially around this cam (14), having different cross sections, which appropriately selected pump a fluid at a constant pressure, regardless of whether the energy provided to the device is constant or variable.

6. A motor pump for using the energy of one or more constant or variable power energy sources, to pump fluids at a constant preset pressure and generate electricity **characterised in that** it has a rotary shaft (1), driven by a machine (31) for obtaining wave energy, that causes the shaft (1) to rotate and then on said shaft (1) we have one or more cams (14) solidly connected to the same shaft (1), that during rotation sequentially actuate a series with a variable number of pistons (15,16,17,18,19,20) located radially around this cam (14), having different cross sections, which appropriately selected pump a fluid at a constant pressure, regardless of whether the energy provided to the device is constant or variable.

7. A motor pump for using the energy of one or more constant or variable power energy sources, to pump fluids at a constant preset pressure and generate electricity **characterised in that** it has a rotary shaft (1), wherein a pressurised fluid actuates on a series with a variable number of pistons (3,4,5,6,7,8), having different cross sections, located radially around one or more cams (2) solidly connected to the shaft (1), causing the shaft (1) to rotate, and then on said shaft we have one or more cams (14) solidly connected to the same shaft, that during rotation sequentially actuate a series with a variable number of pistons (15,16,17,18,19,20) located radially around this cam (14), having different cross sections, which appropriately selected pump a fluid at a constant pressure, regardless of whether the energy provided to the device is constant or variable.

8. A motor pump for using the energy of one or more constant or variable power energy sources, to pump fluids at a constant preset pressure and generate electricity **characterised in that** a pressurised fluid acts on one or more series of radial pistons (3,4,5,6,7,8) and (15,16,17,18,19,20) having different cross sections, which, appropriately selected, located radially around one or more cams (2,14) solidly connected to the shaft (1) cause it to rotate and an electricity generator coupled to said rotary shaft (1) electricity is produced.

9. A motor pump for using the energy of one or more constant or variable power energy sources, to pump fluids at a constant preset pressure and generate electricity **characterised in that** it has a rod (45) that is part of a marine machine, which upon the passage of the waves (42) produces the linear movement thereof, which drives a series of axial pistons (46,47,48) having different cross sections, which appropriately selected pump a fluid at a constant pressure, regardless of whether the energy provided to the device is constant or variable.

10. A motor pump for using the energy of one or more constant or variable power energy sources, to pump fluids at a constant preset pressure and generate electricity **characterised in that** it has a piston (57) that is actuated by a pressurised fluid that produces the axial movement of the rod (56), which drives a series of axial pistons (50,51,52,53,54) having different cross sections, which appropriately selected, pump a fluid at a constant pressure, regardless of the energy provided to the device.

11. A motor pump for using the energy of one or more constant or variable power energy sources, to pump fluids at a constant preset pressure and generate electricity **characterised in that** it has a series of axial pistons (60,61,62,63,64) that actuated by a pressurised fluid move the rod (65) which coupled to a linear electricity generator (66) produces electricity.

12. A motor pump for using the energy of one or more constant or variable power energy sources, to pump fluids at a constant preset pressure and generate electricity **characterised in that** it has a rod (75) that is part of a marine machine, which upon the passage of the waves (72) produces the axial (linear) movement of the rod (75) which comprises ramps (78) wherein the rods rest with their rolling elements (79) of a series of radial pistons (76, 77) which appropriately selected pump a fluid at a constant pressure, regardless of the energy provided to the device.

13. A motor pump for using the energy of one or more constant or variable power energy sources, to pump fluids at a constant preset pressure and generate electricity **characterised in that** it has a piston (83) that is actuated by a pressurised fluid that produces the axial movement of the rod (80), which drives a series of radial pistons (88,89), having different cross sections, which appropriately selected pump a fluid at a constant pressure, regardless of whether the energy provided to the device is constant or variable.

14. A motor pump for using the energy of one or more constant or variable power energy sources, to pump fluids at a constant preset pressure and generate electricity **characterised in that** a pressurised fluid acts on a series of radial pistons (92, 93) having different cross sections, which appropriately selected press on the ramps (91) of the rod (90) and produce the axial (linear) movement thereof which, coupled to a linear electricity generator (98), produces electricity.
